# FASCICULE DE BREVET EUROPEEN

(11) **EP 0 459 881 B1**
(45) Date de publication et mention de la délivrance du brevet: **14.08.1996**
(21) Numéro de dépôt: 91401353.7
(22) Date de dépôt: 27.05.1991
(51) Int. Cl.: C09K 7/02

(54) **APPLICATION DES BOUES AU SCLEROGLUCANE AU FORAGE DES PUITS à GROS DIAMETRE**
Verwendung von Skleroglukanschlämmen zum Bohren von Grossdurchmesserlöchern
Use of scleroglucane muds for the drilling of large diameter holes

(30) Priorité: 28.05.1990 FR 9006575
(43) Date de publication de la demande: 04.12.1991
(73) Titulaire: ELF AQUITAINE, F-92400 Courbevoie (FR)
(72) Inventeur: Ladret, Alain, F-31800 Saint-Gaudens (FR); Donche, Alain, F-64110 Jurancon (FR)
(74) Mandataire: Ohresser, François

(56) Documents cités:
- EP-A- 0 259 939
- FR-A- 2 570 754

## Description

La présente invention concerne l'application d'une boue comprenant du scléroglucane non raffiné aux forages caractérisés par un fort débit de la boue et en particulier les forages de gros diamètre, égal ou supérieur à 30 cm.

La boue de forage est un mélange plus ou moins complexe d'un liquide de base, eau ou huile, et de produits divers, utilisé pour le forage de puits. Cette boue, injectée dans le train de tiges de forage, circule par un mouvement ascendant dans l'espace annulaire compris entre les parois des formations géologiques forées et le train de tiges. Une fonction de la boue est d'assurer l'élimination permanente des déblais arrachés au front de taille pour éviter le bourrage de l'outil. Les déblais doivent être transportés vers la surface dans l'espace annulaire du forage, et éliminés en surface. Il faut pour cela que la boue soit suffisamment visqueuse et que sa portance soit telle que les déblais puissent tenir en suspension dans la boue quand le débit de celle-ci est nul. Une autre des multiples fonctions de la boue est de maintenir la paroi du puits de sorte qu'il n'y ait pas d'éboulements. Cette fonction est normalement assurée grâce au dépôt sur les parois d'une pellicule constituée avec les particules argileuses contenues dans la boue. Toute dégradation des parois du puits doit être évitée dans la mesure du possible.

On peut encore citer comme fonctions usuelles de la boue le refroidissement et la lubrification, sans corrosion, de l'outil de forage, l'équilibrage de la pression des pores de formation, le contrôle de la filtration dans la formation...

En conditions normales de forage, quand ledit forage est suffisamment avancé et que le diamètre du forage est inférieur ou égal à 30 cm, on contrôle étroitement les propriétés physiques et physico-chimiques de la boue et on maintient ces propriétés ou on les adapte aux conditions du forage grâce à l'adjonction de différents produits tels des viscosifiants, alourdissants, réducteurs de filtration, fluidifiants (etc.) comme constituants divers et multiples de la boue.

Pour assurer ses multiples fonctions, la boue doit présenter certaines caractéristiques physiques et physico chimiques adaptées aux problèmes rencontrés qui varient en fonction non seulement de la nature des terrains rencontrés mais également de l'état d'avancement du forage et de la technique forage utilisée, et qui peuvent être antinomiques.

Le forage de puits à gros diamètre pose par exemple des problèmes bien spécifiques en raison de leur grand volume même et de la nature des terrains traversés, souvent peu consolidés. Ces forages en gros diamètre sont effectués en phase de début de forage, pour le passage des 300 à 1500 premiers mètres de formation. Pour ce type de forage la priorité est généralement donnée au nettoyage du trou et aux qualités de suspension de la boue. En effet, ce type de forage est caractérisé par un volume très important des déblais à éliminer, compte tenu de la surface des parois, de la nature des terrains, et de la vitesse d'avancement souvent élevée. Les volumes de boue mis en oeuvre pour le forage des puits à gros diamètre sont considérables. A titre d'exemple pour un puits de 90 cm de diamètre, le volume du trou de forage est de l'ordre de 800 litres par mètre linéaire et les pompes débitent 4.000 à 4.500 litres par minute. Les boues utilisées doivent donc pouvoir être préparées très rapidement et en grande quantité.
Usuellement le forage des puits en gros diamètre nécessitant un fort débit de fluide s'effectue à l'eau seule, l'insuffisance de viscosité étant compensée par une augmentation du débit de pompage.

Cette technique, si elle présente un intérêt économique évident, dans le cas des forages en mer par exemple, a pour inconvénient qu'elle provoque un lessivage des parois important. De plus il est fréquent avec l'utilisation d'un tel fluide de forage constituée d'eau seulement, que lors d'arrêt de la circulation du fluide dans le puits comme il peut s'en produire au cours d'un forage, les déblais forés se redéposent au fond du puits et provoquent le bourrage de l'outil de forage à la reprise du forage.

On ajoute parfois à l'eau utilisée pour les forages à fort débit une certaine quantité d'une argile réactive telle la bentonite pour augmenter la portance de la boue de forage. L'utilisation d'un tel produit ajouté à l'eau de forage est toutefois limitée car d'une part elle augmente fortement le coût du forage compte tenu des volumes de boue mis en oeuvre et des quantités de produit nécessaire, de l'ordre de 80 kilos par mètre cube, et d'autre part elle nécessite le stockage de plusieurs centaines de tonnes de produit sur le lieu du forage.

On a maintenant trouvé que l'adjonction à l'eau utilisée pour les forages de puits à forts débit de boue d'une faible concentration d'un biopolymère appelé scléroglucane, connu comme viscosifiant utilisable sur de larges plages de température de salinité et de Ph, et n'ayant pas été raffiné, permet d'améliorer considérablement les performances dudit forage à l'eau ainsi que la qualité du trou, pour un coût modique et une mise en oeuvre simple.

L'invention a pour objet l'utilisation d'une boue composée d'une quantité utile de scléroglucane non raffiné dans l'eau contenant éventuellement un bactéricide pour le forage de puits à gros diamètre supérieur à 30 cm, en particulier dans les formations superficielles. L'eau de base utilisée pour la boue selon l'invention, peut être une eau douce, une eau de mer, une saumure ou tout autre type d'eau par exemple dure, calcaire ou magnésienne. La boue utilisée selon l'invention est constituée par une solution aqueuse contenant 2 à 20 kg/m³ de scléroglucane. Cette boue utilisée est constituée préférentiellement par une solution aqueuse contenant de 4 à 10 kilos par mètre cube de scléroglucane.

Les scléroglucanes qui entrent dans la composition des boues dans les applications selon l'invention, sont des homopolysaccharides hydrosolubles non ioniques de poids moléculaires dépassant 500.000, dont les molécules sont constituées d'une chaîne linéaire principale formée de motifs D-glucose liés par des liaisons β 1,3 et dont un sur trois est lié à un motif D-glucose latéral par une liaison β1,6. Ces polysaccharides sont obtenus par fermentation d'un milieu à base de sucre et de sels minéraux sous l'action d'un microorganisme de type Sclérotium. Une description plus complète des scléroglucanes et de leur préparation peut être trouvée dans la citation USA. 3 301 848, dont le contenu est incorporé par référence à la présente description.

Comme source de scléroglucane, on peut par exemple faire appel selon l'invention au scléroglucane isolé du milieu de fermentation, ledit produit se présentant sous forme de poudre ou bien d'une solution plus ou moins concentrée dans un solvant aqueux et/ou hydro-alcoolique, ou encore employer le milieu réactionnel liquide issu de la fermentation et renfermant le scléroglucane en solution.

Le scléroglucane entrant dans la composition de la boue utilisée dans l'application selon l'invention contient tout ou partie du mycélium du champignon producteur.

L'utilisation d'une boue composée d'un quantité limitée de scléroglucane non raffiné, en dilution dans de l'eau pour le forage des puits à fort débit permet, pour un coût et des besoins de stockage limités, d'augmenter considérablement la portance de la boue et donc la tenue en suspension des déblais de sorte que le bourrage est évité et qu'un nettoyage efficace du puits est assuré, associé à un bon rendement des pompes. Un autre avantage de l'utilisation d'une telle boue dans l'application selon l'invention est qu'elle réduit les effets de lessivage et assure un maintien et une préservation des parois de bien meilleure qualité que ceux obtenus avec un forage à l'eau (pure ou avec une argile réactive).

Les avantages d'une boue composée d'une quantité utile de scléroglucane en dilution dans une eau de base quelconque et son intérêt pour l'application selon l'invention sont illustrés par les exemples suivants donnés à titre non limitatifs, à partir de boues complexes quine sont pas spécialement destinées à l'application selon l'invention.

Le matériel utilisé pour les mesures est normalisé (normes du comité API RP 13). La viscosité des solutions testées a été mesurée à l'aide d'un viscosimètre FANN à six vitesses, à savoir 600, 300, 200, 100, 50 et 30 tours par minute, correspondant chacune à un gradient de vitesse exprimé en s⁻¹, respectivement 1020, 510, 340, 170, 85,51 s⁻¹. Le viscosimètre FANN fournit une mesure de contrainte de cisaillement dite lecture FANN exprimée ici en pascal (Pa). Le viscosimètre FANN est un appareil à cylindres coaxiaux dont le rotor est entraîné à l'aide d'un moteur électrique. On mesure la résistance au cisaillement de la boue contenue dans un gobelet dans lequel on immerge les cylindres coaxiaux. On lit sur un cadran gradué la résistance au cisaillement à différentes vitesses de rotation du rotor. La viscosité de la boue entraîne une rotation du stator indiqué sur le cadran de lecture.

Les mesures de filtration sont effectuées après trente minutes à l'aide d'un filtre presse API et s'expriment en millilitres.

Le scléroglucane utilisé est fabriqué par SANOFI BIO INDUSTRIES à partir d'une souche de sclérotium Rolsfii. On a utilisé une qualité non raffinée comprenant de l'ordre de 25 % de résidus de mycélium commercialisée sous le nom d'ACTIGUM CS6.

Les caractéristiques rhéologiques sont indiquées par la donnée de viscosités exprimées en pascal seconde (Pa.s), mais également de grandeurs dites "gels", d'une viscosité apparente VA, d'une viscosité plastique VP, d'une "yield value" YV couramment exploitée par les spécialistes de boues de forage. Les "gel O" et "gel 10", mesurés au viscosimètre FANN, permettent d'apprécier la thixotropie de la boue, c'est-à-dire son aptitude à se gélifier lorsque le fluide est immobile. Cette propriété pseudoplastique se caractérise par un seuil d'écoulement en dessous duquel le fluide reste immobile, et une diminution plus ou moins rapide de la viscosité dès qu'il y a écoulement.

Pour obtenir la valeur des gels, le mode opératoire est le suivant : on fait tourner le rotor du viscosimètre à 600 tr/mn, pendant 30s, puis on stoppe le moteur. On attend 10s et on met le moteur en rotation à 3 tr/mn. La déviation maximale lue constitue le gel initial ou "gel O". On laisse ensuite reposer la boue 10 mn et on remet le rotor en rotation à 3 tr/mn. Le nombre maxima lu constitue le "gel 10".

Pour obtenir la viscosité apparente de la boue en centipoises, on divise la lecture à 600 tr/mn par deux. Le calcul de la viscosité plastique, en centipoises, s'effectue en faisant la soustraction entre la lecture FANN à 600 tr/mn et la lecture FANN à 300 tr/mn. La yield-value est obtenue en faisant la différence entre la viscosité apparente et la viscosité plastique, et en multipliant par deux cette différence. La yield-value exprime la tension minimale en dessous de laquelle il n'y a pas d'écoulement pour des régimes d'écoulement laminaire.

### EXEMPLE 1 :

On a comparé le comportement rhéologique et la thixotropie au viscosimètre FANN d'une boue au scléroglucane et d'une boue à la bentonite auxquelles on a rajouté une charge argileuse (argile native dite FGN non réactive) comme contaminant.

La composition des boues est donnée ci-dessous :
- Boue au scléroglucane :

| | |
|---|---|
| eau | 1,5 l |
| soude (NaOH) | jusqu'à pH 10 |
| CS6 | 12 g |
| FGN | 75 g |

- Boue à la bentonite :

| | |
|---|---|
| eau | 2 l |
| soude (NaOH) | 2 g |
| bentonite (FB2) | 120 g |
| FGN | 100 g |
| viscosifiant | 3 g |
| (Dispral Regular) | |

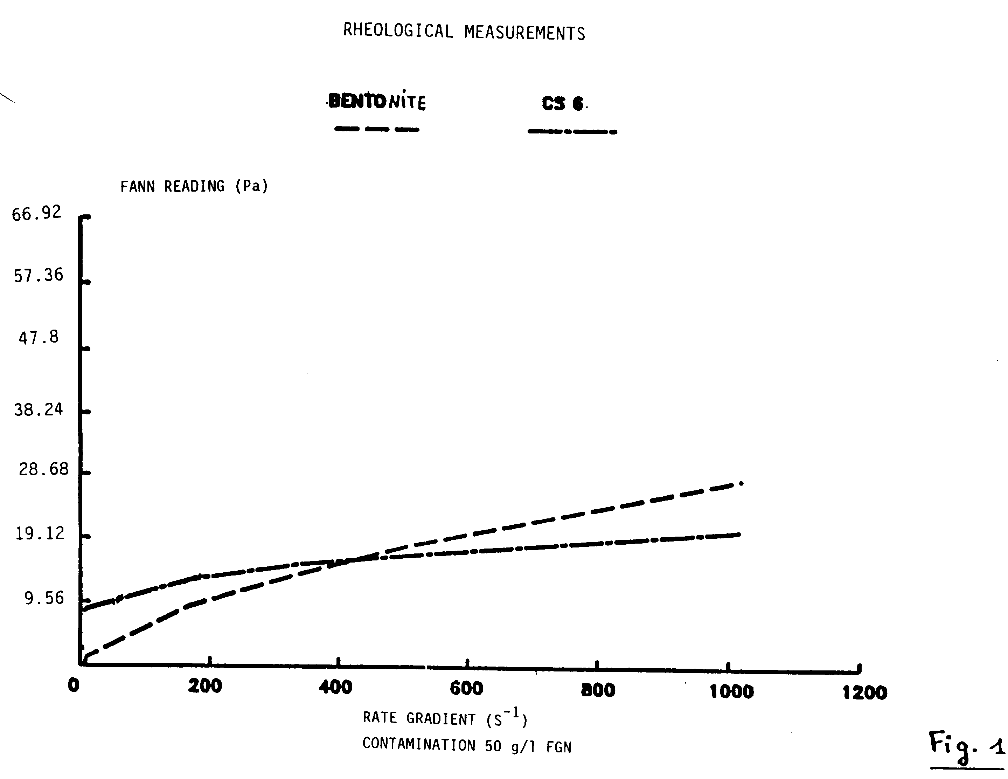

Les courbes de la figure 1 permettent de comparer les lectures FANN de ces deux boues.

La boue au scléroglucane se caractérise par des propriétés rhéologiques pseudoplastiques très marquées et en particulier par un seuil d'écoulement élevé.

Le tableau ci-dessous donne les valeurs de gels pour la boue au scléroglucane pour différents temps.

| temps | 0mn | 10mn | 30mn | 1h | 2h | 5h | 8h | 18h | 24h | 48h | 72h |
|---|---|---|---|---|---|---|---|---|---|---|---|
| gel_{Pa} | 11,5 | 15,8 | 15,3 | 16,3 | 16,3 | 18,2 | 17,7 | 18,2 | 19,1 | 22 | 4,3 |

Ces gels ont des valeurs stables et élevées. La baisse brutale observée pour 72 heures est due à la destruction du produit par fermentation ; l'ajout d'un bactéricide à la boue suffit à éliminer ce phénomène.

On constate aussi que les gels sont plats, c'est-à-dire que la différence d'un gel à l'autre est faible et que cette différence ne varie que très peu même pour des temps élevés de l'ordre de 48h, contrairement à une boue ne contenant que de la bentonite. L'énergie nécessaire pour remettre en mouvement une telle boue ne dépend donc pratiquement pas du temps d'arrêt du pompage.

Les résultats montrent l'aptitude remarquable des boues au scléroglucane à se gélifier lorsque le fluide est immobile. Cette gélification disparaît très rapidement dès qu'il y a écoulement. Ce phénomène est totalement réversible dans le cas du scléroglucane et montre l'aptitude d'une telle boue à maintenir les solides forés ou alourdissants en suspension lors des arrêts de la circulation dans le puits et à se remettre immédiatement en mouvement lorsque le pompage est repris sans que des surpressions importantes aux conséquences néfastes ne soient créées dans le puits. A titre d'exemple, l'ajout de 0,4 % en poids de scléroglucane permet de stabiliser une suspension de solides dans l'eau.

### EXEMPLE 2 :

On a comparé le comportement de pastilles d'argiles réactives avec une boue de chantier et une boue au scléroglucane.

Les compositions des boues sont données ci-dessous, pour un litre d'eau douce :
- Boue de chantier :

| | |
|---|---|
| eau douce | 1 l |
| soude | jusqu'à pH 9,6 |
| bentonite | 30 g |
| Antisol 30000 | 3 g |
| Antisol 100 | 1 g |
| CMC | 2 g |

- Boue au scléroglucane

| | |
|---|---|
| eau douce | 1 l |
| soude | jusqu'à pH 9,8 |
| bentonite | 20 g |
| CS6 | 4 g |
| FGN | 60 g |
| CaCO₃ | 20 g |

La composition de la boue au scléroglucane a été définie de façon à obtenir des caractéristiques physiques et chimiques semblables à la boue de chantier.

Les Antisol 30000 et Antisol 100 sont des PAC (Polyanionic cellulose) viscosifiants respectivement à haute et à basse viscosité. La CMC 110 est une carboxyméthylcellulose employée comme réducteur de filtrat.

Les FGN et CaCO₃ ont été introduits dans la boue au scléroglucane pour simuler la présence de solides provenant du terrain en quantité de l'ordre de 5 % à 7 % en volume.

Les caractéristiques de ces boues sont données dans le tableau ci-dessous :

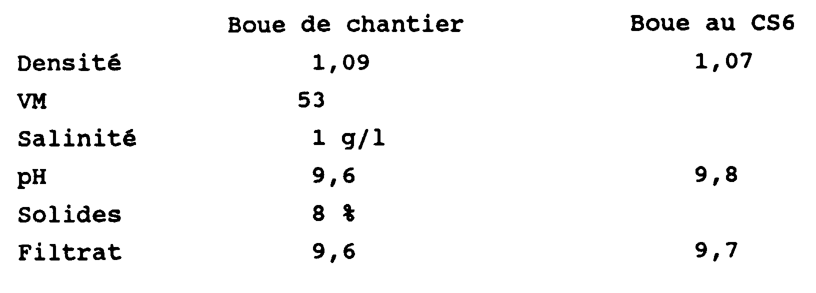

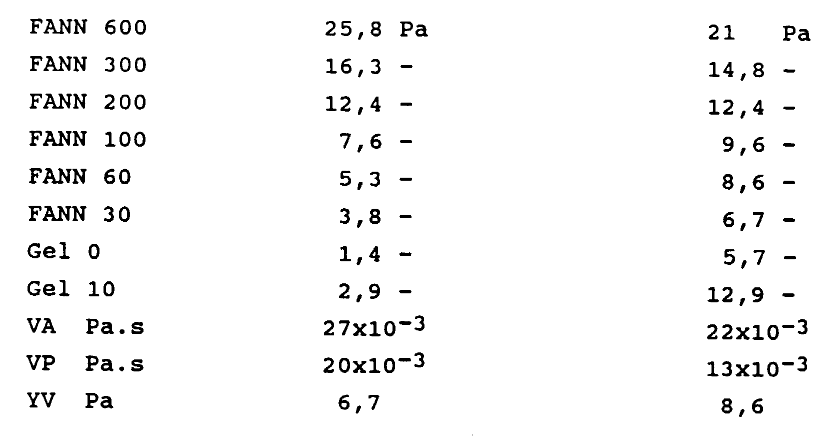

On constate que le gel 0 obtenu pour la boue au CS6 est beaucoup plus élevé que le gel 0 obtenu pour la boue de chantier. Une valeur élevée pour le gel 0 est l'indication d'un seuil de cisaillement élevé. L'écart relatif entre le gel 0 et le gel 10 peut être lié à la faculté qu'a la boue de se gélifier rapidement et donc de maintenir immédiatement les solides en suspension sans décanter.

L'existence d'un tel seuil d'écoulement entraîne pour une telle boue au scléroglucane la propriété de se déplacer dans un tube comme un bouchon, avec une très faible absorption d'énergie. Le rendement du forage s'en trouve amélioré.

## Revendications

1. Utilisation d'une boue constituée par une solution d'une quantité utile de scléroglucane non raffiné dans l'eau, contenant éventuellement un bactéricide, pour le forage de puits de diamètre supérieur ou égal à 30 cm.

2. Utilisation selon la revendication 1 de ladite boue pour le forage de formations superficielles.

3. Utilisation selon l'une des revendications 1 à 2, caractérisée en ce que ladite boue est constituée par une solution aqueuse contenant 2 à 20 kg/m³ de scléroglucane.

4. Utilisation selon l'une des revendications 1 à 3, caractérisée en ce que ladite boue est constituée par une solution aqueuse comprenant 4 à 10 kg/m³ de scléroglucane.

## Patentansprüche

1. Verwendung einer Spülung, die aus einer Lösung einer geeigneten Menge an ungereinigtem Skleroglucan in Wasser, die gegebenenfalls ein Bakterizid enthält, besteht, zum Bohren von Bohrlöchern mit einem Durchmesser von 30 cm oder darüber.

2. Verwendung der Spülung nach Anspruch 1 zum Bohren von oberflächlichen Formationen.

3. Verwendung nach einem der Ansprüche 1 bis 2, dadurch gekennzeichnet, daß die Spülung aus einer wäßrigen, 2 bis 20 kg/m³ Skleroglucan enthaltenden wäßrigen Lösung besteht.

4. Verwendung nach einem der Ansprüche 1 bis 3, dadurch gekennzeichnet, daß die Spülung aus einer wäßrigen, 4 bis 10 kg/m³ Skleroglucan umfassenden wäßrigen Lösung besteht.

## Claims

1. Use of a mud constituted by a solution of a useful quantity of unrefined scleroglucan in water, optionally containing a bactericide, for the drilling of wells of a diameter greater than or equal to 30 cm.

2. Use according to Claim 1 of the mud for the drilling of surface formations.

3. Use according to either Claim 1 or Claim 2, characterised in that the mud is constituted by an aqueous solution containing from 2 to 20 kg/m³ of scleroglucan.

4. Use according to any one of Claims 1 to 3, characterised in that the mud is constituted by an aqueous solution comprising from 4 to 10 kg/m³ of scleroglucan.
